(19) Europäisches Patentamt

European Patent Office

Office européen des brevets

(11) Publication number: **0 224 336**
**A2**

## (12) EUROPEAN PATENT APPLICATION

(21) Application number: **86308348.1**

(22) Date of filing: **27.10.86**

(51) Int. Cl.⁴: **G 03 B 17/20**

(30) Priority: **21.11.85 US 800314**

(43) Date of publication of application:
**03.06.87 Bulletin 87/23**

(84) Designated Contracting States: **DE FR GB**

(71) Applicant: **POLAROID CORPORATION**
**549 Technology Square**
**Cambridge, Massachusetts 02139 (US)**

(72) Inventor: **Neely, Judith L.**
**18 Milton Road**
**Reading MA 01867 (US)**

(74) Representative: **Skone James, Robert Edmund et al**
**GILL JENNINGS & EVERY 53-64 Chancery Lane**
**London WC2A 1HN (GB)**

(54) Method and system for use with photographic apparatus.

(57) A system for displaying ranging information in alphanumeric form in a photographic apparatus such as a camera is described. The system comprises a sonar-type range finder (20) for transmitting ranging energy toward a subject to be ranged; a distance decoder module (50) for deriving a range signal by measuring a characteristic of reflected or non-reflected ranging energy from the subject; a seven segment decoder (60) for converting the range signal into a subject range display signal which facilitate displaying the subject range in alphanumeric form; and an LED display (64) for displaying the range display signal in alphanumeric form. Preferably, the range display signal is displayed in the viewfinder of the apparatus.

FIG. 3

**Description**

## METHOD AND SYSTEM FOR USE WITH PHOTOGRAPHIC APPARATUS

The present invention relates to a method and system for use with photographic apparatus.

It is generally known to use viewfinders for displaying various forms of information for the operation of a camera. For example, viewfinder windows may be used to display exposure data by a needle and a scale of a meter which would appear superimposed on the scene, or visible colour signals for warning the user when light is inadequate. Other cameras may display aperture value and shutter speed selected by the automatic exposure mechanism (see US Patent No.4,322,153). Cameras may also employ means for visually indicating the range of a subject (see US Patents 3,174,416 and 4,053,912) or displays of ranging information with graphic symbols representing different ranging zones (see US Patent 4,530,583). Known viewfinders may show in other ways the focusing zone to which a lens has been set.

In accordance with one aspect of the present invention, a method of displaying ranging information in alphanumeric form in a photographic apparatus, comprises the steps of deriving a range signal indicative of subject distance; converting the range signal into a subject range display signal which facilitates displaying the subject range in alphanumeric form; and displaying the range display signal in alphanumeric form.

In accordance with a second aspect of the present invention a system for displaying ranging information in alphanumeric form in a photographic apparatus comprises means for transmitting ranging energy toward a subject to be ranged; means for deriving a range by measuring a characteristic of reflected or non-reflected ranging energy from the subject; means for converting the range signal into a subject range display signal which facilitates displaying the subject range in alphanumeric form; and means for displaying the range display signal in alphanumeric form.

These aspects of the present invention provide an improved information display apparatus and method for visually displaying automatically range information in alphanumeric form. In a preferred embodiment, the displaying is done in the camera viewfinder. In some examples, the visual display may incorporate information regarding picture quality based on the range information.

It should be noted that none of the known viewfinder display systems discloses a system in which subject range is automatically and electronically displayed in the viewfinder in alphanumeric form. Furthermore, none of the known prior art discloses such display system in which the displayed alphanumeric range information is coupled with exposure information utilising such range information.

The method preferably includes the steps of transmitting ranging energy toward a subject to be ranged, deriving a ranging signal by measuring a characteristic of reflected or non-reflected ranging energy from the subject, and converting the ranging signal into a subject range display signal which facilitates displaying the subject range in alphanumeric form.

Another embodiment provides steps for displaying other photographic information which incorporates subject range information. More specifically, the steps include sensing the scene brightness level prior to exposure and deriving a scene brightness level signal. The scene brightness signal and the subject range signal are evaluated to provide output signals displayed in the viewfinder indicating whether or not a picture of the subject at the evaluated range and scene brightness level is of unacceptable quality.

In a further embodiment, a strobe mode selector switch is actuated. When actuated the picture quality evaluation step includes evaluating a predetermined strobe or ambient mode signal along with the scene brightness level and subject range signals.

The invention enables the provision of an improved method of and apparatus for displaying visual information relating to the photographic process; the provision of an improved method of and apparatus for automatically displaying visual subject range information in alphanumeric form; the provision of the last noted type wherein the alphanumeric subject range information is displayed in the viewfinder; the provision of an improved method of and apparatus for displaying in the viewfinder other photographic information which is a function of the subject range; the provision of an improved method of an apparatus for displaying in the viewfinder signals indicating whether a picture will be bad or good as a function of scene brightness and subject range; the provision of an improved method and apparatus of the foregoing type wherein picture quality is determined as a function of subject range, ambient scene brightness level and a chosen ambient or strobe mode; and the provision of an improved method and apparatus which adjusts the brightness of the alphanumeric display in response to scene brightness.

In accordance with a third aspect of the present invention, a camera system comprises a source of artificial illumination and a manually operable actuator, the camera system being adapted to expose a photographic film unit to scene light during an exposure interval during which the source of artificial illumination is activated to direct illumination towards the scene; means responsive to the actuation of the actuator prior to the commencement of an exposure interval to derive a first signal indicative of the ambient scene brightness level; means responsive to the actuation of the actuator prior to the commencement of an exposure interval to derive a second signal indicative of camera-to-subject distance; and means for evaluating the first and second signals prior to the commencement of an exposure interval to determine whether a film unit would be exposed to an acceptable amount of light from the scene to be photographed under the specific range and subject illumination conditions indicated thereby.

An example of photographic apparatus incorporating a system for carrying out methods according to the present invention will now be described with reference to the accompanying drawings, in which:-

Figure 1 is a perspective view of the photographic apparatus;

Figure 2 is an enlarged and exploded perspective view of a viewfinder assembly and visual display arrangement; and,

Figure 3 is a schematic, in block diagram form, of a circuit arrangement used for effecting the visual display function.

The principles of the invention may be used in a variety of photographic apparatus which include an automatic range finding system. In the illustrated embodiment, the display system 10 may be used in conjunction with a self-developing type camera having automatic ranging, such as described in U.S. Patent 4,526,444. Since the photographic camera apparatus 12 does not, per se, form an aspect of the present invention, only features necessary for an understanding of this invention will be set forth.

In the photographic apparatus 12 there is provided a first housing portion 14 and a second housing portion 16, the latter of which has one end attached pivotally to the former. The first housing portion 14 has a rearwardly slanting portion that terminates before a component module 18 mounted on the second housing portion 16.

The front face of the module 18 includes a sonar-type rangefinder 20, a taking lens assembly 22, a photocell assembly 24, a viewfinder lens assembly 26 and a source of artificial illumination, such as electronic strobe 28.

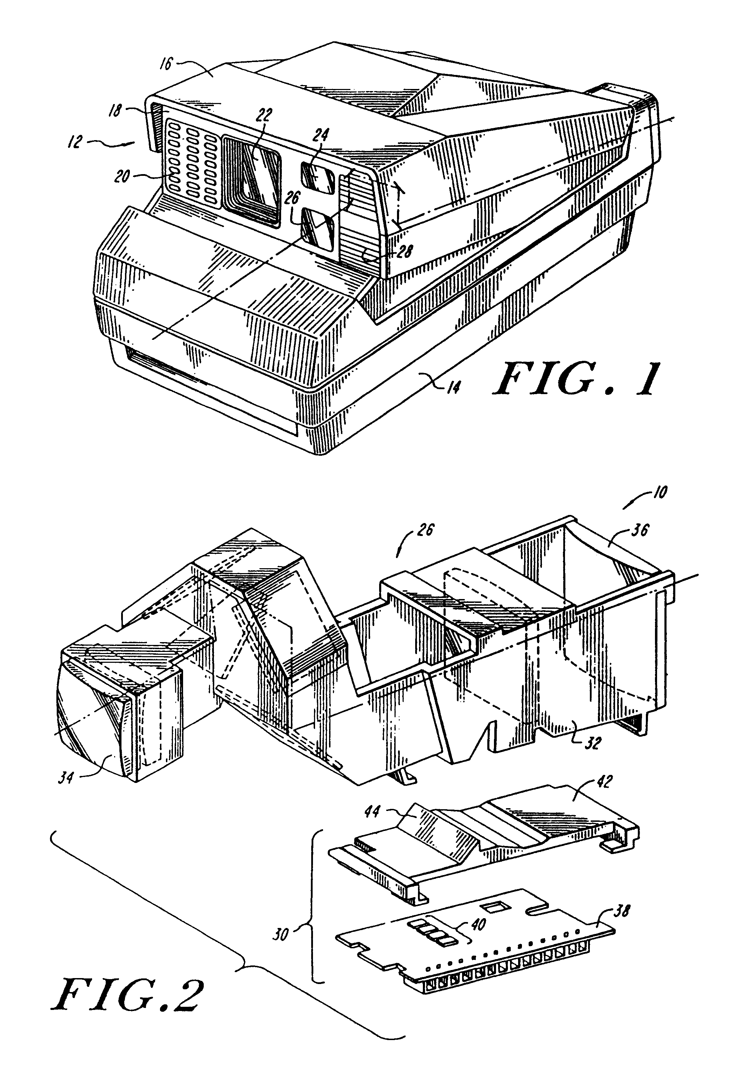

FIG. 2 shows portions of the viewfinder lens assembly 26 within which is positioned a viewfinder display arrangement 30. The display arrangement 30 is used for purposes of displaying the range information in alphanumeric form, and other exposure control information. A more detailed description may be found in U.S. Patent 4,526,444. There is provided a viewfinder tunnel assembly 32 connected to and between an eye lens 34 and a front lens 36.

For displaying the visual information in the viewfinder so that it is visible through the eye lens 34 there is provided a circuit board 38 having integrated therewith an assembly of light emitting diodes 40 for dis playing the information desired. The light-emitting diodes are registered in optical communication with an optical member 42 including a prism 44 mounted atop the circuit board 38. When the circuit board 38 is mounted to the optical member 42 and the latter is mounted to the tunnel 32 the prism 44 is in position in the plane of the real image formed by the eyepiece and front lenses 34,36; respectively. The prism 44 is arranged to direct light from the assembly of LED's 40 into a lens group, wherein such light may be seen by an observer through the eyepiece lens 34 together with the image in the viewfinder lens assembly 26. It may also be rendered visible in another display.

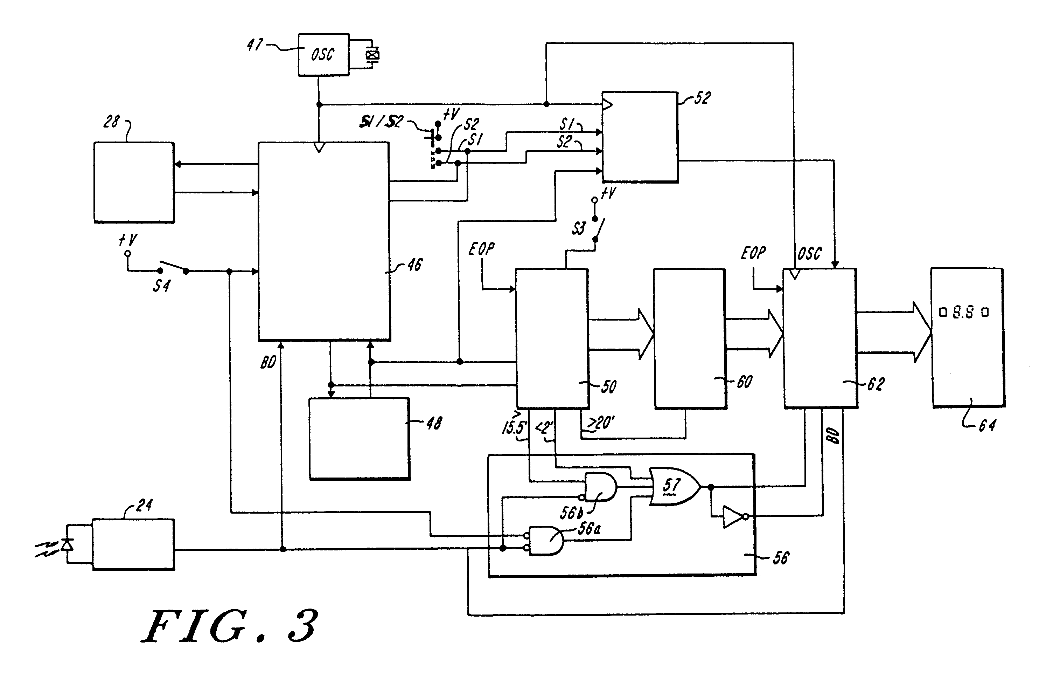

In FIG. 3, there is disclosed a two-stage user operated switch SI/S2. The switch SI/S2 is operable for commencing a display mode when in one stage, and an exposure mode when in a second stage. The switch SI/S2 when depressed initially makes contact to close SI and establish the first stage which allows the strobe unit 28 to be charged by a power source (not shown). The exposure control module 46 allows the strobe unit 28 to charge; and once the strobe unit 28 has been charged, it transmits a strobe ready signal to the exposure control module 46. The exposure control module 46 includes logic controls (not shown) such as an exposure control chip and a processing control chip for controlling the photographic apparatus during both the display and exposure modes. The exposure control module 46 is initially actuated by pushing the switch SI/S2 to the first stage so that SI is closed. An oscillator 47 controls timing of the exposure control module 46.

The camera ranging module 48 is actuated by the exposure control module 46 to issue a start range signal so as to commence a range determining function after the strobe unit 28 has been charged. In this embodiment the rangefinder 20 is of the sonar type described generally in U.S. Patent 4,526,444. The sonar rangefinder 20 includes a transducer (not shown) which emits sonar ranging energy towards a subject. More specifically, the start range signal actuates a range transmitting circuit (not shown) in the camera ranging module 48. This causes a burst of sonar ranging energy from the transducer. The transducer is actuated in correspondence with a start time signal which the exposure control module 46 inputs to a time measuring circuit (not shown) in the distance decoder module 50. The time measuring circuit comprises a series of flip-flops which serve to measure the time interval between emission of the sonar waves and detection of an echo of the reflected waves by the transducer. Detection of the echo triggers an echo detect circuit in the camera ranging module 48 which issues a range stop signal. The range stop signal causes the time measuring circuit in the distance decoder module 50 to end its time counting operation and derive a time signal indicative of the elapsed time between sonar emission and echo receipt. The time measuring circuit in the distance decoder 50 will, therefore, provide a digital output signal corresponding to time. This digital time signal is converted to a subject distance or range signal expressed in terms of either units of feet or meters. This conversion is done by a known type of time/distance conversion circuit in the distance decoder module 50.

If the photographic subject is located beyond a preselected distance, for example, beyond 6 meters, the echo detect circuit will issue automatically a default time signal. This default signal indicates that no echo was detected during a time interval corresponding to no less than the time required for the sonar signal to travel the distance to the subject and return therefrom as an echo. In this embodiment, the default signal will be operative so that no range signal appears in the viewfinder. Towards this end the default signal is issued to the distance decoder module 50 which, in turn, transmits it to a seven segment decoder 60. The seven segment decoder 60 then operates to prevent displaying any distance in the viewfinder. Alternatively, the default signal may operate an LED to give a visual indication of the fact that a subject is beyond 6 meters.

In this embodiment, the user may selectively convert the time based signals of the time measuring circuit into corresponding distance signals which may be displayed in metric or English units of measurement by manipulating a display mode switch S3. The apparatus may be structured that the S3 switch does not, when actuated, automatically convert a distance displayed in feet to one displayed in meters. To effect display of a distance reading in meters, a reranging must be commenced. Towards that end the SI/S2 switch is released and it automatically returns to the start condition. Thereafter, the switch SI/S2 may again be depressed to the first mode (SI closed), thereby effectuating a range display in meters if the display previously gave an indication in feet. The S3 switch may be such that when closed one kind of measurement unit is displayed, and when open indicates the other kind of measurement unit.

Simultaneously, the range stop signal from the camera ranging module 48 is input to a display timing circuit 52. The display timing circuit 52 operates to determine at what point in time and the time duration the LED display will operate to display the information. For example, the display timing circuit 52 may display the alphanumeric range information and other information for a minimum of 50 ms. if the operator pushes the SI/S2 switch to the exposure condition. The alphanumeric range information will not appear if the SI/S2 switch is released. Also the range information will be visible if the SI switch only is closed.

The exposure control module 46 may also operate to initiate a brightness detect mode. The brightness detect mode enables a camera photocell assembly 24, including the photocell, to sense ambient scene brightness prior to exposure. It transmits such information via digital high/low brightness detect signals to a good/bad picture decoder 56. The brightness detect signal is either high or low. In other words, the ambient scene light sensed by the photocell is compared to a preselected threshold value. If the sensed brightness is above the threshold value, a high brightness signal is issued. Conversely, if scene brightness is below the threshold value a low brightness signal is issued. The photocell assembly 24 includes an amplifier and comparator device. The high or low brightness detect signals are simultaneously issued to LED driver circuit 62 and to the exposure control module 46. The signals are sent to the exposure control module 46 for regulating exposure in a manner which is unrelated to the present invention, and to the LED circuit so that the LED driver circuit 62 will adjust the brightness of the display.

The LEDs 40 appear bright in high ambient light and dim in low ambient light. The brightness may be adjusted by regulating current sources. The brightness detect (BD) signal is also forwarded to the LED display driver circuit 62. This circuit 62, in response to a high brightness detect signal, will regulate its duty cycle to increase the length of time of each LED pulse for display purposes, it being understood that the longer the duty cycle the brighter the display. Conversely, the shorter the duty cycle the dimmer the display. In connection with regulating the duty cycle the LED driver 62 controls current sources, such as amplifiers, for regulating current drive.

The good/bad picture decoder 56 serves to determine whether the resulting picture of the subject will be bad or good as a function of subject range and scene lighting. The picture decoder 56 will issue signals indicative of the quality of the picture, and these signals are appropriately displayed by the LED arrangement 40 in the viewfinder 20. Towards this end there may be provided a yellow LED light (not shown) for bad pictures and a green LED light (not shown) for good pictures.

There may be three conditions under which the good/bad picture decoder 56 will issue bad picture signals. The first condition is if the subject is too close to the camera, for example, if the subject range is less than 0.6 meters. A second condition is if there is low ambient brightness and the strobe is not operating. The third condition is when the subject is at a distance greater than the effective useful range of the strobe, for example, in excess of 5 meters, and low brightess is detected. Of course, the present invention envisions issuing, if desired, bad signals for other range and scene lighting conditions.

A strobe selector switch S4 is associated with the good/bad picture decoder 56. The switch S4 is movable between a strobe position in which the strobe 28 may be used for exposure purposes and an ambient position in which the strobe will not be used. When the strobe switch S4 is actuated so that the strobe 28 is used, a logic high signal will be forwarded to circuitry in the picture decoder 56. When the strobe is not intended to be used logic low signal will be forwarded to the circuitry in the picture decoder 56. The good/bad picture decoder 56 includes circuitry having a series of logic gates which are structured and arranged to effectuate an evaluation of the range signal, the brightness detect signal and the presence or absence of a strobe charge signal. In particular, the logic gates include an AND gate 56a which has inverted inputs from the brightness detect and from the S4 switch. The output of the AND gate 56a goes to an OR gate 57. The inputs to the AND gate 56b are the signal from the distance decoder module 50 representative of the fact that the subject distance is greater than 5 meters and an inverted input from the brightness detect. The output of the AND gate 56b is input to the OR gate 57 along with an input from the distance decoder module 50 representative of the fact that the subject distance is less than 60 centimeters. After an evaluation of the foregoing type, signals representative of good or bad pictures will be transmitted to the LED driver 62 which in turn activates the display module 64 which includes the LED's 40 for lighting the appropriate one of the green or yellow LED.

The distance signal from the distance decoder module 50 may be transmitted to a suitable seven segment decoder device 60. The seven segment decoder device 60 converts digital range signals into appropriate seven segment display signals. These display signals cause the seven segment LED driver 62 to actuate the display module 64 to display the information desired.

The LED driver module 62 includes an appropriate number of current sources (not shown) which control seven segment LEDs 40 and good/bad LEDs. The LEDs 40 display the range in numerical form including a display for a decimal point. The LED driver 62 is operable for a period of time determined by the timing circuit 52. The module 64 may include the good and bad picture indicating LEDs. The images from the LEDs are optically transmitted through the prism 44 and rendered visible in the eye-piece 34. In this fashion the user will be able to view directly the distance in alphanumeric form, as well as other information relating to the quality of the picture given the prevailing range and scene brightness conditions.

The two-stage switch SI/S2 may then be further depressed for commencing the exposure mode of the camera 12. In particular, the closing of the switch SI/S2 to the second stage transmits a signal to the exposure control module 46. This serves to activate the photocell assembly and shutter blade assembly (not shown) to perform the necessary operations for achieving an exposure. The operational steps for the exposure do not, per se, form an aspect of this invention. Thus, a detailed description thereof has been omitted. The exposure control module 46 when actuated will also issue a reset signal to the ranging module, the distance decoder and the LED driver and display module.

Prior to the commencement of an exposure the display system 10 may be used solely for purposes of displaying the subject range in alphanumeric form. Since exposure does not commence until the SI/S2 switch is depressed to the second stage the photographer may use the range information for a variety of purposes. The operator may also experimentally determine the ideal range for a portrait and thereafter use the range display to duplicate the ideal distance.

The apparatus also includes use of an end of pack signal. In particular, a sensor (not shown) in the camera may sense that a film pack is empty. The switch sends a signal to the distance decoder module 50 so that the distance decoder module will signal a "O" range value in the viewfinder. The closing of the switch also operates the LED driver 62 such that the EOP signal "O" range signal is caused to flash by virtue of enabling and disabling a current source in the LED driver.

## Claims

1. A method of displaying ranging information in alphanumeric form in a photographic apparatus, the method comprising the steps of deriving a range signal indicative of subject distance: converting the range signal into a subject range display signal which facilitates displaying the subject range in alphanumeric form; and displaying the range display signal in alphanumeric form.

2. A method according to claim 1, further comprising the steps of sensing scene brightness prior to exposure; deriving a scene brightness level signal; comparing the scene brightness level signal and the subject range signal to provide output signals indicating whether a picture of the subject at the sensed range and in the sensed brightness level will be good or bad: and displaying good or bad picture signals.

3. A method according to claim 2, wherein the comparing step further includes the steps of selectively utilising a predetermined strobe mode signal having a predetermined value which is to be compared with the scene brightness value, and the subject range signal for use in determining good or bad pictures.

4. A method according to claim 2 or claim 3, further comprising the step of regulating brightness of the displayed good or bad picture signals and the alphanumeric range signal as a function of ambient brightness.

5. A method according to any of the preceding claims, wherein the displayed information is displayed in a viewfinder of the photographic apparatus.

6. A method according to any of the preceding claims, further comprising the step of displaying a visual indication that a film pack to be used in the photographic apparatus is without film.

7. A system for displaying ranging information in alphanumeric form in a photographic apparatus, the system comprising means (20) for transmitting ranging energy toward a subject to be ranged; means (50) for deriving a range by measuring a characteristic of reflected or non-reflected ranging energy from the subject; means (60) for converting the range signal into a subject range display signal which facilitates displaying the subject range in alphanumeric form; and means (64) for displaying the range display signal in alphanumeric form.

8. A system according to claim 7, wherein the means (64) for displaying the alphanumeric signal displays the signal in a viewfinder (26) of the photographic apparatus.

9. A system according to claim 7 or claim 8, further comprising means (24) for sensing scene brightness prior to exposure and for deriving a scene brightness signal; means (56) for evaluating the scene brightness signal and the subject range signal to provide signals indicating whether a picture of the subject at the sensed range and in the sensed scene brightness will be good or bad; means (64) for displaying good or bad picture signals in the viewfinder.

10. A system according to claim 9, further comprising means responsive to a strobe mode switch which in one mode utilises a strobe mode signal having a predetermined value which is inputted to the evaluating means (56) so that the evaluating means evaluates the strobe signal, the scene brightness value, and the subject range signal for use in determining good or bad pictures.

11. A system according to any of the preceding claims, including means (62) for regulating the brightness of the display (64) as a function of scene brightness.

12. A camera system including a source of artificial illumination (28) and a manually operable actuator (SI/S2), the camera system being adapted to expose a photographic film unit to scene light during an exposure interval during which the source of artificial illumination is activated to direct illumination towards the scene; means (24, 46) responsive to the actuation of the actuator (SI/S2) prior to the commencement of an exposure interval to derive a first signal indicative of the ambient scene brightness level; means (20,46,48,50) responsive to the actuation of the actuator (SI/S2) prior to the commencement of an exposure interval to derive a second signal indicative of camera-to-subject distance; and means (56) for evaluating the first and second signals prior to the commencement of an exposure interval to determine whether a film unit would be exposed to an acceptable amount of light from the scene to be photographed under the specific range and subject illumination conditions indicated thereby.

13. A camera system according to claim 12, further comprising a viewfinder (26) and means (62,64) responsive to the evaluating means (56) for presenting a viewable indication of the determination made by the evaluating means in the viewfinder prior to the commencement of an exposure interval.

0224336

FIG. 1

FIG.2

*FIG. 3*